# EUROPÄISCHE PATENTSCHRIFT

(11) **EP 3 857 037 B1**
(45) Veröffentlichungstag und Bekanntmachung des Hinweises auf die Patenterteilung: **13.07.2022**
(21) Anmeldenummer: 19838930.6
(22) Anmeldetag: 18.09.2019
(51) Int. Cl.: F02B 75/32, F16C 7/02, F02B 75/04, F16C 7/06

(54) **VORRICHTUNG UND VERFAHREN ZUR EINSTELLUNG DER LÄNGE EINER PLEUELSTANGE EINES ZYLINDERS EINER BRENNKRAFTMASCHINE**
DEVICE AND METHOD FOR ADJUSTING THE LENGTH OF A CONNECTING ROD OF A CYLINDER OF AN INTERNAL COMBUSTION ENGINE
DISPOSITIF ET PROCÉDÉ POUR LE RÉGLAGE DE LA LONGUEUR D'UNE BIELLE D'UN CYLINDRE D'UN MOTEUR À COMBUSTION INTERNE

(30) Priorität: 25.09.2018 DE 102018123500
(43) Veröffentlichungstag der Anmeldung: 04.08.2021
(73) Patentinhaber: MAN Energy Solutions SE, 86153 Augsburg (DE)
(72) Erfinder: KOTTRE, Ewald, 86154 Augsburg (DE)
(86) Internationale Anmeldenummer: PCT/EP2019/074926
(87) Internationale Veröffentlichungsnummer: WO 2020/069864

(56) Entgegenhaltungen:
- DE-A1- 3 516 506
- DE-A1-102013 109 730
- DE-C- 641 846
- US-A- 3 903 753

## Beschreibung

Die Erfindung betrifft eine Vorrichtung und ein Verfahren zur Einstellung der Länge einer Pleuelstange eines Zylinders einer Brennkraftmaschine.

Eine Brennkraftmaschine, wie zum Beispiel eine Schiffsdieselbrennkraftmaschine verfügt über mehrere Zylinder. Jeder Zylinder einer Brennkraftmaschine umfasst einen Kolben, der in einer Laufbuchse auf und ab bewegbar geführt ist. Der Kolben ist über eine Pleuelstange an eine Kurbelwelle der Brennkraftmaschine gekoppelt, wobei es aus der Praxis bereits bekannt ist, dass sich eine Pleuelstange aus einem Pleuelkopf und einem Pleuelschaft zusammensetzt, die über Schraubverbindungen aneinander befestigt sind. Zur Anbindung der Pleuelstange an den Kolben dient ein Pleuellagerauge und zur Anbindung der Pleuelstange an die Kurbelwelle ein Hublagerauge.

Um an einer Brennkraftmaschine ein sogenanntes Verdichtungsverhältnis einzustellen, ist es aus der Praxis bekannt, den Kolbenkopf auszutauschen, zum Beispiel durch einen Kolbenkopf mit einer abweichenden Muldengeometrie. Ebenfalls ist es aus der Praxis bereits bekannt, zur Einstellung des Verdichtungsverhältnisses die Länge der Pleuelstange eines Zylinders zu verändern, nämlich durch Einbau und/oder Ausbau einer Zwischenplatte zwischen dem Pleuelkopf und dem Pleuelschaft. Sowohl zum Austausch des Kolbenkopf als auch zum Austausch bzw. Einbau bzw. Ausbau einer Zwischenplatte muss nach der Praxis der Zylinder demontiert werden. Insbesondere ist es erforderlich, die Pleuelstange zu demontieren. Dies ist sehr zeitaufwendig. Eine Pleuelstange, die aufgrund ihrer Konstruktion den Einbau einer Zwischenplatte ermöglichen würde ist in US 3 903 753 A gezeigt.

Es besteht Bedarf daran, die Länge einer Pleuelstange einfacher einzustellen bzw. zu verändern, insbesondere um das Verdichtungsverhältnis des jeweiligen Zylinders anzupassen.

Der hier vorliegenden Erfindung liegt die Aufgabe zugrunde, eine neuartige Vorrichtung sowie ein entsprechendes Verfahren zur Einstellung der Länge der Pleuelstange eines Zylinders der Brennkraftmaschine durch Einbau und/oder Ausbau einer Zwischenplatte zwischen Pleuelkopf und Pleuelschaft der Pleuelstange vorzuschlagen.

Diese Aufgabe wird durch eine Vorrichtung zur Einstellung der Länge einer Pleuelstange eines Zylinders einer Brennkraftmaschine gemäß Anspruch 1 gelöst. Die Erfindung stellt eine Vorrichtung zur Einstellung der Länge einer Pleuelstange eines Zylinders einer Brennkraftmaschine, nämlich durch Einbau und/oder Ausbau einer Zwischenplatte zwischen einem Pleuelkopf und einem Pleuelschaft der Pleuelstange im in der Brennkraftmaschine montierten Zustand der Pleuelstange, mit zumindest folgenden Baugruppen bereit: Einem Auspendelschutz für den Pleuelkopf, der am Pleuelkopf zwischen dem Pleuelkopf und einer Laufbuchse des Zylinders montierbar ist. Auflagen, die an gegenüberliegenden Seiten der Pleuelstange an Gegengewichten des Zylinders montierbar sind. Halterungen, die an den Auflagen montierbar sind und sich zwischen den Auflagen senkrecht zu denselben erstrecken. Hubzylindern, die an den Halterungen montierbar sind und dem Anheben des Pleuelkopfs gegenüber dem Pleuelschaft bei gelösten Schraubverbindungen zwischen Pleuelkopf und Pleuelschaft dienen. Zumindest eine der Auflagen umfasst einen Fixierbügel, über welchen der Pleuelschaft an der jeweiligen Auflage fixierbar ist. Die erfindungsgemäße Vorrichtung erlaubt den Einbau und/oder Ausbau von Zwischenplatten im in der Brennkraftmaschine montierten Zustand der Pleuelstange. Hierdurch kann der Aufwand bei der Einstellung der Länge der Pleuelstange gegenüber der Praxis deutlich reduziert werden.

Vorzugsweise weist die Vorrichtung Stützen auf, die nach dem Anheben des Pleuelkopfs gegenüber dem Pleuelschaft am Pleuelkopfs als Schutzelemente montierbar sind. Über die Stützen kann eine Sicherheitsfunktion realisiert werden. Es besteht keine Gefahr, dass dann, wenn die Hubzylinder unerwartet den Pleuelkopf absenken, eine an der Brennkraftmaschine arbeitende Person einer Verletzungsgefahr unterliegt. Die Stützen stützen den Pleuelkopf entsprechend ab.

Das erfindungsgemäße Verfahren zur Einstellung der Länge einer Pleuelstange eines Zylinders einer Brennkraftmaschine ist in Anspruch 6 definiert. Das Verfahren umfasst zumindest folgende Schritte: Überführen eines Kolbens des Zylinders in eine definierte Postion. Lösen und Entfernen der Schraubverbindungen zwischen Pleuelkopf und Pleuelschaft. Montieren des Auspendelschutzes am Pleuelkopf. Montieren der Auflagen an den Gegengewichten des Zylinders. Montieren der Halterungen an den Auflagen. Montieren der Hubzylinder an den Halterungen. Anheben des Pleuelkopfs gegenüber dem Pleuelschaft über die Hubzylinder. Einbauen und/der Ausbauen der Zwischenplatte. Absenken des Pleuelkopfs gegenüber dem Pleuelschaft über die Hubzylinder. Demontieren der Hubzylinder, der Halterungen, der Auflagen und des Auspendelschutzes. Hinzufügen und Anziehen der Schraubverbindungen zwischen Pleuelkopf und Pleuelschaft. Mit diesen Verfahrensschritten kann eine Zwischenplatte zwischen Pleuelkopf und Pleuelschaft in der Brennkraftmaschine im montierten Zustand der Pleuelstange eingebaut und/oder ausgebaut werden.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: eine perspektivische Ansicht einer Vorrichtung zur Einstellung der Län-ge einer Pleuelstange eines Zylinders einer Brennkraftmaschine;
- Fig. 2: einen Zylinder einer Brennkraftmaschine zusammen mit eine Baugrup-pe der Vorrichtung zur Verdeutlichung des Verfahren zur Einstellung der Länge der Pleuelstange des Zylinders einer Brennkraftmaschine;
- Fig. 3: einen Ausschnitt aus dem Zylinder der Fig. mit weiteren Baugruppen der Vorrichtung zur Einstellung der Länge einer Pleuelstange eines Zy-linders einer Brennkraftmaschine;
- Fig. 4: den Ausschnitt der Fig. 5 in einem zweiten Zustand; und
- Fig. 5: den Querschnitt V-V der Fig. 4.

Die Erfindung betrifft eine Vorrichtung und ein Verfahren zur Einstellung der Länge einer Pleuelstange eines Zylinders einer Brennkraftmaschine.

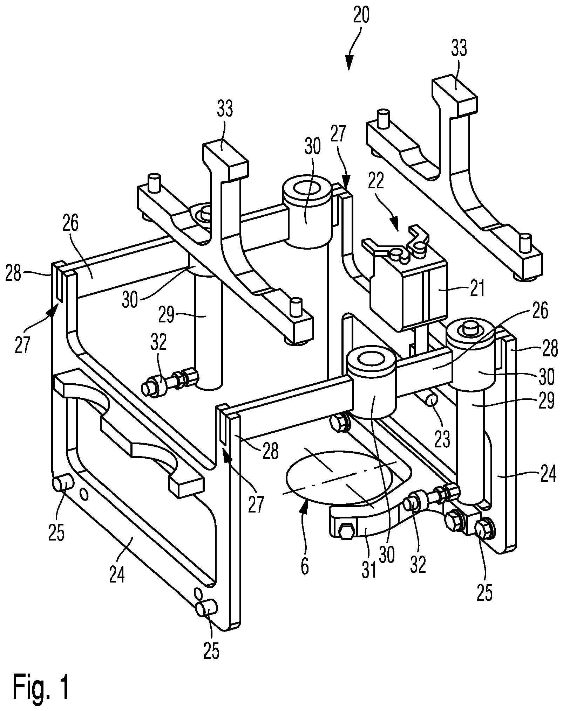

Fig. 1 zeigt eine perspektivische Ansicht einer erfindungsgemäßen Vorrichtung 20, die dem Einbau und/oder Ausbau einer Zwischenplatte zwischen einem Pleuelkopf und einem Pleuelschaft einer Pleuelstange eines Zylinder der Brennkraftmaschine dient, und zwar im in der Brennkraftmaschine montierten Zustand der Pleuelstange, sodass es nicht erforderlich ist, die Pleuelstange aus der Brennkraftmaschine auszubauen.

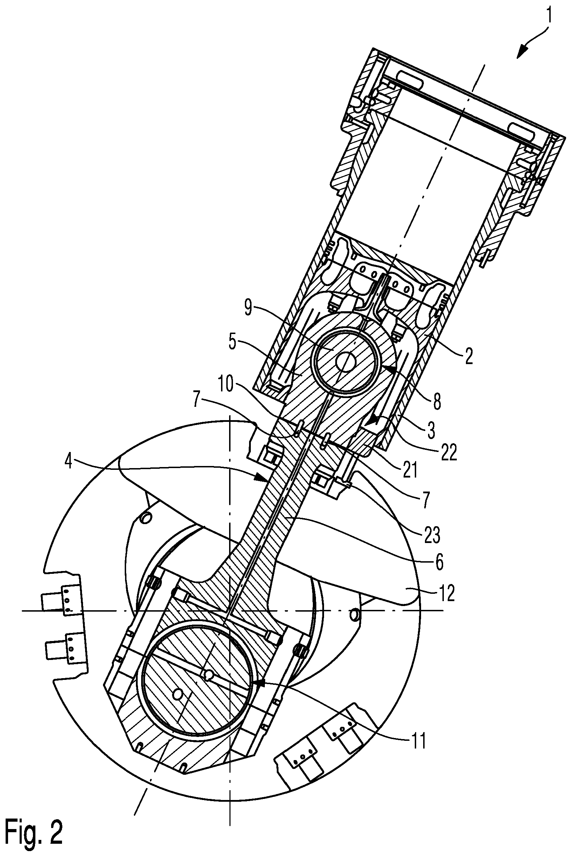

Fig. 2 bis 5 zeigen die erfindungsgemäße Vorrichtung 20 im Einsatz im Bereich eines Zylinders 1 der Brennkraftmaschine. Der Zylinder 1 umfasst einen Kolben 2, der in einer Laufbuchse 3 auf und ab bewegbar geführt ist. Ferner umfasst der Zylinder 1 eine Pleuelstange 4, die aus einem Pleuelkopf 5 und einem Pleuelschaft 6 zusammengesetzt ist, wobei der Pleuelkopf 5 und der Pleuelschaft 6 über Zentriereinrichtungen 7 zentriert und über nicht gezeigte Schraubverbindungen im zentrierten Zustand miteinander verschraubt sind. Zur Anbindung der Pleuelstange 4 an dem Kolben 2 dient ein Pleuellagerauge 8 der Pleuelstange 4, durch die sich ein Kolbenbolzen 9 erstreckt. Zur Anbindung der Pleuelstange 4 an eine Kurbelwelle dient ein Hublagerauge 11 der Pleuelstange 4.

Zwischen dem Pleuelkopf 5 und dem Pleuelschaft 6 der Pleuelstange 4 kann eine Zwischenplatte 10 mit einer definierten Dicke eingesetzt werden, um so die Länge der Pleuelstange 4 einzustellen und so letztendlich ein Verdichtungsverhältnis des Zylinders 1 zu beeinflussen.

Die erfindungsgemäße Vorrichtung 20 der Fig. 1 dient dem Einbau und/oder Ausbau einer solchen Zwischenplatte 10 im in der Brennkraftmaschine montierten Zustand der Pleuelstange 4.

Die erfindungsgemäße Vorrichtung 20 umfasst einen Auspendelschutz 21 für den Pleuelkopf 5 der Pleuelstange 4, der am Pleuelkopf 5 montierbar ist, und zwar zwischen dem Pleuelkopf 5 und der Laufbuchse 3 des Kolbens 2. Der Auspendelschutz 21 verfügt über einen vorzugsweise als Schnapper ausgebildeten Befestigungsmechanismus 22, über welchen der Auspendelschutz 21 am Pleuelkopf 5 der Pleuelstange 4 montiert werden kann. Dieser Befestigungsmechanismus 22 kann über einen Betätigungsmechanismus 23 des Auspendelschutzes 21 betätigt, nämlich geöffnet und geschlossen werden.

Ferner verfügt die erfindungsgemäße Vorrichtung 20 über Auflagen 24. Jede der Auflagen 24 ist an einer Seite der Pleuelstange 4 an einem entsprechenden Gegengewicht 12 des jeweiligen Zylinders 1 montierbar, sodass an zwei sich gegenüberliegenden Seiten des Zylinders 1 jeweils eine Auflage 24 an einem Gegengewicht des Zylinders 1 montiert ist. Fig. 1 zeigt entsprechende Montageschrauben 25 zur Montage der Auflagen 24 an den Gegengewichten 12 des Zylinders 1.

Die erfindungsgemäße Vorrichtung 20 verfügt weiterhin über Halterungen 26. Die Halterungen 26 sind an den Auflagen 24 montierbar und erstrecken sich senkrecht zu den Auflagen 24.

Fig. 1 kann entnommen werden, dass die Halterungen 26 in Schlitze 27 der Auflagen 24 einführbar sind, die an Vorsprüngen 28 der Auflagen ausgebildet sind, wobei diese Vorsprünge 28 denjenigen Abschnitten der Auflagen gegenüberliegen, durch die sich die Montageschrauben 25 zur Montage der Auflagen 24 an den Gegengewichten 12 des Zylinders 1 erstrecken.

Die erfindungsgemäße Vorrichtung 20 verfügt darüber hinaus über Hubzylinder 29. Hubzylinder 29 sind an den Halterungen 26 montierbar und dienen dem Anheben des Pleuelkopfes 5 der Pleuelstange 4 gegenüber dem Pleuelschaft 6 der Pleuelstange 4 bei gelösten Schraubverbindungen zwischen Pleuelkopf 5 und Pleuelschaft 6.

Wie Fig. 1 entnommen werden kann, verfügt jede der Halterungen 26 über zumindest zwei Aufnahmepositionen 30 für die Hubzylinder 29, wobei im Bereich jeder Halterung 26 jeweils ein Hubzylinder 29 in eine der Aufnahmepositionen 30 angeordnet wird bzw. ist.

Im in Fig. 1 gezeigten Ausführungsbeispiel weist eine der Auflagen 24, die an einem der Gegengewichte 12 des Zylinders 1 montiert ist, einen Fixierbügel 31 auf, über welchen der Pleuelschaft 6 der Pleuelstange 4 an der jeweiligen Auflage 24 fixierbar ist.

Jede der beiden Auflagen 24 ist demnach an einem Gegengewicht 12 montiert. Eine der Auflagen 24 fixiert den Pleuelschaft 6 der Pleuelstange 4 und stützt sich an demselben ab. Die Halterungen 26 sind an den Auflagen 24 montiert. Die Halterungen 26 nehmen die Hubzylinder 29 auf. Dann, wenn die Schraubverbindungen zwischen Pleuelkopf 5 und Pleuelschaft 6 gelöst sind, können die Hubzylinder 29 den Pleuelkopf 5 gegenüber dem Pleuelschaft 6 anheben, ein Verkippen des Pleuelschafts 6 wird über den Fixierbügel 31 und ein Verkippen des Pleuelkopfs 5 über den Auspendelschutz 21 verhindert.

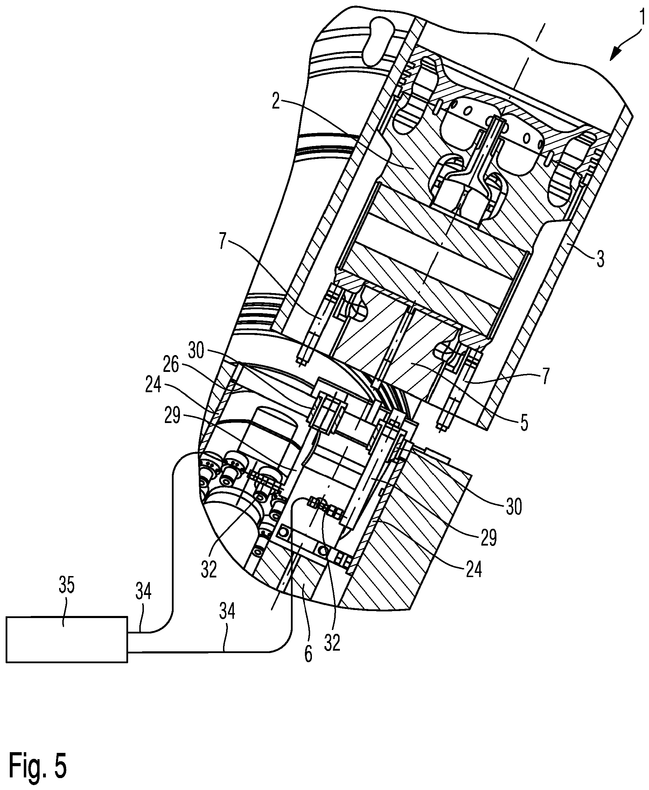

Bei den Hubzylindern 29 handelt es sich vorzugsweise um druckmittelbetätigte Zylinder, wie zum Beispiel um Hydraulikzylinder. Fig. 1 zeigt entsprechende Druckmittelanschlüsse 32 zur Versorgung der Hubzylinder 29 mit einem Druckmittel. Fig. 5 zeigt Druckmittelleitungen 34 und eine Druckmittelpumpe 35. Ausgehend von der Druckmittelpumpe 35 können die Hubzylindern 29 über die Druckmittelleitungen 34 und Druckmittelanschlüsse 32 mit Druckmittel versorgt werden.

Im gezeigten, bevorzugten Ausführungsbeispiel weist die erfindungsgemäße Vorrichtung 20 weiterhin Stützen 33 auf. Die Stützen 33 sind nach dem Anheben des Pleuelkopfs 5 relativ zum Pleuelschaft 6 am Pleuelkopf 5 als Schutzelement montierbar, um dann, wenn die Hubzylinder 29 ungewollt versagen sollten, ein unkontrolliertes nach unten Bewegen des Pleuelkopfes 5 in Richtung auf den Pleuelschaft 6 zu verhindern und so an der Brennkraftmaschine arbeitende Personen vor einer Verletzungsgefahr zu schützen.

Um eine Zwischenplatte 10 zwischen dem Pleuelkopf 5 und dem Pleuelschaft 6 der Pleuelstange 4 im in der Brennkraftmaschine montierten Zustand der Pleuelstange 4 einzubauen und/oder auszubauen, wird unter Verwendung der oben beschriebenen Vorrichtung 20, wie folgt vorgegangen:
Zunächst wird in einem Schritt a) der Kolben 2 des Zylinders 1, an welchem die Zwischenplatte 10 einzubauen und/oder auszubauen ist, in eine definierte Position überführt, vorzugsweise in den unteren Totpunkt. Siehe Fig. 2.

Darauffolgend werden in einem Schritt b) Schraubverbindungen zwischen Pleuelkopf 5 und Pleuelschaft 6 gelöst und entfernt.

Anschließend wird in einem Schritt c) der Auspendelschutz 21 am Pleuelkopf 5 montiert, vorzugsweise dadurch, dass der Schnapper 22 in eine entsprechende Kontur am Pleuelkopf 5 einrastet bzw. eingreift. Siehe Fig. 2.

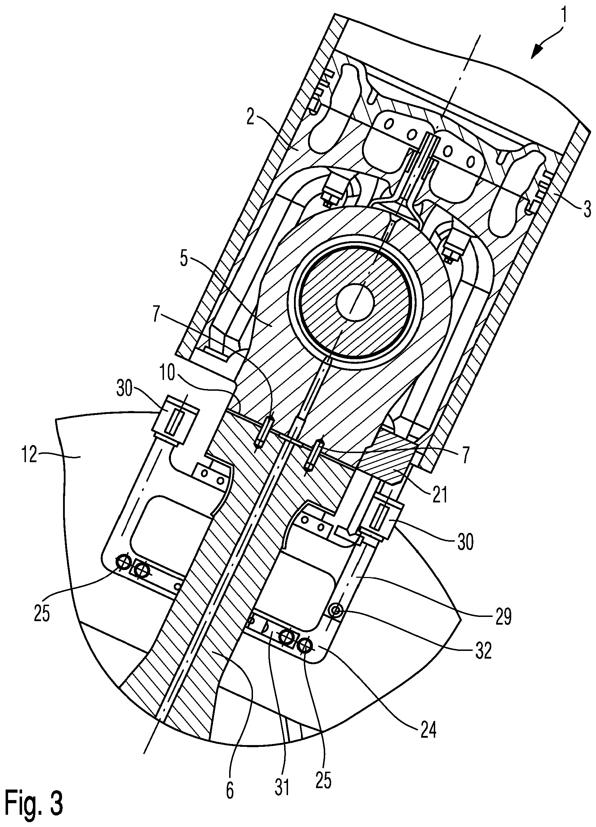

Nachfolgend werden in einem Schritt d) die Auflagen 24 der Vorrichtung 20 an den Gegengewichten 12 des jeweiligen Zylinders 1 montiert, und zwar über die Montageschrauben 25. Siehe Fig. 3.

Anschließend werden in einem Schritt e) die Halterungen 26 an den Auflagen 24 montiert, wobei in einem sich anschließenden Schritt f) die Hubzylinder 30 an den Halterungen 26 montiert werden. Siehe Fig. 3.

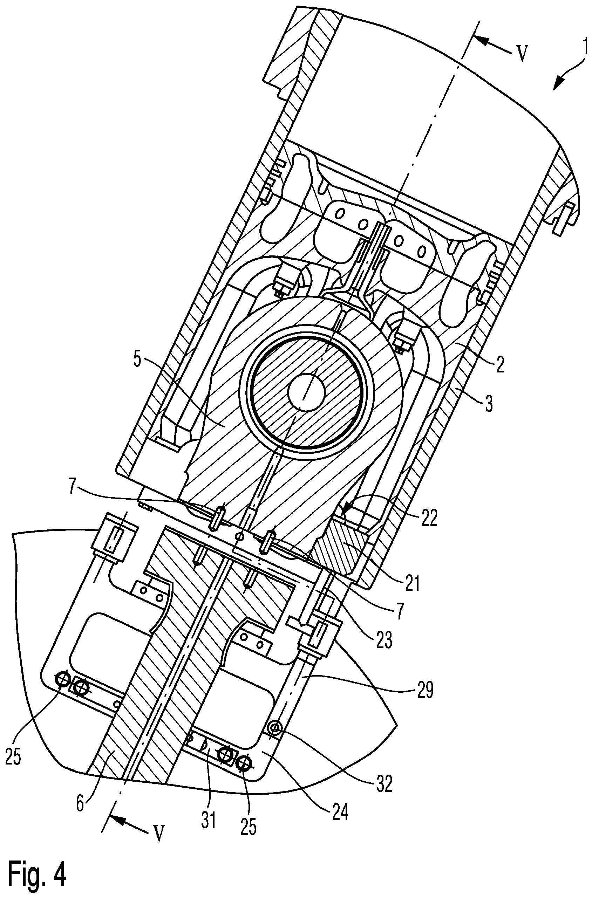

Anschließend kann in einem Schritt g) der Pleuelkopf 5 gegenüber dem Pleuelschaft 6 der Pleuelstange 4 angehoben werden. Siehe Fig. 4, 5.

Vorzugsweise werden im angehobenen Zustand die Stützen 33 am Pleuelkopf 5 montiert und anschließend der Pleuelkopf 5 wieder abgesenkt, wobei sich dann der Pleuelkopf 5 über die Stützen 33 am Pleuelschaft 6 abstützt. Dabei ist dann ein definierter Spalt zwischen Pleuelkopf 5 und Pleuelschaft 6 ausgebildet, der einen Zugriff auf die Zwischenscheibe 10 ermöglicht.

Anschließend erfolgt in einem Schritt h) das Ausbauen und/oder Einbauen der Zwischenplatte 10. Es ist möglich, eine Zwischenplatte 10 mit einer ersten Dicke gegen eine Zwischenplatte 10 mit einer zweiten Dicke auszutauschen, um so die Länge der Pleuelstange 4 anzupassen.

Nach dem Einbau und/oder Ausbau der Zwischenplatte 10 kann der Pleuelkopf 5 gegenüber dem Pleuelschaft 6 angehoben werden, um die Halter 33 zu demontieren.

Nach dem Einbauen und Ausbauen der Zwischenplatte 10 erfolgt in jedem Fall in einem Schritt i) das Absenken des Pleuelkopfs 5 gegenüber dem Pleuelschaft 6 über die Hubzylinder 29, wobei dann, wenn sich der Pleuelkopf 5 ggf. unter Zwischenanordnung der Zwischenplatte 10 am Pleuelschaft 6 abstützt, in einem Schritt j) Hubzylinder 29, Halterungen 26 und Auflagen 24 sowie Auspendelschutz 21 demontiert werden, um anschließend in einem Schritt k) Schraubverbindungen zwischen Pleuelkopf 5 und Pleuelschaft 6 hinzuzufügen und anzuziehen.

Die Erfindung erlaubt einen einfachen und zeitsparenden Einbau sowie Ausbau von Zwischenplatten 10 zwischen einem Pleuelkopf 5 und einem Pleuelschaft 6 einer Pleuelstange 4 zur Veränderung der Länge der Pleuelstange 4, um so insbesondere das Verdichtungsverhältnis des Zylinders 1 entsprechend anzupassen.

## Patentansprüche

1. Vorrichtung (20) zur Einstellung der Länge einer Pleuelstange (4) eines Zylinders einer Brennkraftmaschine, nämlich durch Einbau und/oder Ausbau einer Zwischenplatte (10) zwischen einem Pleuelkopf (5) und einem Pleuelschaft (6) der Pleuelstange (4) im in der Brennkraftmaschine montierten Zustand der Pleuelstange (4), mit zumindest folgenden Baugruppen:
einem Auspendelschutz (21) für den Pleuelkopf (5), der am Pleuelkopf (5) zwischen dem Pleuelkopf (5) und einer Laufbuchse (3) des Zylinders montierbar ist,
Auflagen (24), die an gegenüberliegenden Seiten der Pleuelstange (4) an Gegengewichten (12) des Zylinders montierbar sind,
Halterungen (26), die an den Auflagen (24) montierbar sind und sich zwischen den Auflagen (24) senkrecht zu denselben erstrecken,
Hubzylindern (29), die an den Halterungen (26) montierbar sind und dem Anheben des Pleuelkopfs (5) gegenüber dem Pleuelschaft (6) bei gelösten Schraubverbindungen zwischen Pleuelkopf (5) und Pleuelschaft (6) dienen.

2. Vorrichtung nach Anspruch 1, **dadurch gekennzeichnet, dass** zumindest eine der Auflagen (24) einen Fixierbügel (31) umfasst, über welchen der Pleuelschaft (6) an der jeweiligen Auflage (24) fixierbar ist.

3. Vorrichtung nach Anspruch 1 oder 2, **dadurch gekennzeichnet, dass** jede Halterung (26) zumindest zwei Aufnahmepositionen (30) für die Hubzylinder (29) aufweist.

4. Vorrichtung nach einem der Ansprüche 1 bis 3, **dadurch gekennzeichnet, dass** die Hubzylindern (29) Hydraulikzylinder sind.

5. Vorrichtung nach einem der Ansprüche 1 bis 4, **gekennzeichnet durch** Stützen (33), die nach dem Anheben des Pleuelkopfs (5) gegenüber dem Pleuelschaft (6) am Pleuelkopfs (5) als Schutzelemente montierbar sind.

6. Verfahren zur Einstellung der Länge einer Pleuelstange (4) eines Zylinders einer Brennkraftmaschine, nämlich durch Einbau und/oder Ausbau einer Zwischenplatte (10) zwischen einem Pleuelkopf (5) und einem Pleuelschaft (6) der Pleuelstange (4) im in der Brennkraftmaschine montierten Zustand der Pleuelstange unter Verwendung der Vorrichtung nach einem der Ansprüche 1 bis 5, zumindest folgenden Schritten:
a) Überführen eines Kolbens des Zylinders in eine definierte Postion;
b) Lösen und Entfernen der Schraubverbindungen zwischen Pleuelkopf (5) und Pleuelschaft (6);
c) Montieren des Auspendelschutzes (21) am Pleuelkopf (5);
d) Montieren der Auflagen (24) an den Gegengewichten (12) des Zylinders;
e) Montieren der Halterungen (26) an den Auflagen (24);
f) Montieren der Hubzylindern (29) an den Halterungen (26);
g) Anheben des Pleuelkopfs (5) gegenüber dem Pleuelschaft (6) über die Hubzylinder (19);
h) Einbauen und/der Ausbauen der Zwischenplatte (10);
i) Absenken des Pleuelkopfs (5) gegenüber dem Pleuelschaft (6) über die Hubzylinder (29);
j) Demontieren der Hubzylinder (29), der Halterungen (26), der Auflagen (24) und des Auspendelschutzes (21);
k) Hinzufügen und Anziehen der Schraubverbindungen zwischen Pleuelkopf (5) und Pleuelschaft (6).

7. Verfahren nach Anspruch 6, **dadurch gekennzeichnet, dass** der Kolben in Schritt a) in den unteren Totpunkt überführt wird.

8. Verfahren nach Anspruch 6 oder 7, **dadurch gekennzeichnet, dass** nach Schritt g) und vor Schritt h) die Stützen (33) montiert werden und der Pleuelkopfs (5) gegenüber dem Pleuelschaft (6) absenkt werden, bis der Pleuelkopf (5) über die Stützen (33) abgestützt ist.

9. Verfahren nach Anspruch 8, **dadurch gekennzeichnet, dass** nach Schritt h) und vor Schritt i) der Pleuelkopf (5) gegenüber dem Pleuelschaft (6) angehoben wird und die Stützen (33) demontiert werden.

## Claims

1. A device (20) for adjusting the length of a connecting rod (4) of a cylinder of an internal combustion engine, namely by installing and/or removing an intermediate plate (10) between a small end (5) and a connecting rod shank (6) of the connecting rod (4) in the state of the connecting rod (4) mounted in the internal combustion engine, having at least the following assemblies:
a swing guard (21) for the small end (5), which can be mounted on the small end (5) between the small end (5) and a liner (3) of the cylinder,
supports (24), which can be mounted on opposite sides of the connecting rod (4) on counter-weights (12) of the cylinder,
holders (26), which can be mounted on the supports (24) and extend between the supports (24) perpendicularly to the same,
lift cylinders (29), which can be mounted on the holders (26) and serve for lifting the small end (5) relative to the connecting rod shank (6) with screw connections between small end (5) and connecting rod shank (6) disconnected.

2. The device according to Claim 1, **characterised in that** at least one of the supports (24) includes a fixing arm (31), via which the connecting rod shank (6) can be fixed on the respective support (24) .

3. The device according to Claim 1 or 2, **characterised in that** each holder (26) comprises at least two receiving positions (30) for the lift cylinders (29).

4. The device according to any one of the Claims 1 to 3, **characterised in that** the lift cylinders (29) are hydraulic cylinders.

5. The device according to any one of the Claims 1 to 4, **characterised by** props (33) which, following the lifting of the small end (5) relative to the connecting rod shank (6) can be mounted on the small end (5) as protection elements.

6. A method for adjusting the length of a connecting rod (4) of a cylinder of an internal combustion engine, namely by installing and/or removing an intermediate plate (10) between a small end (5) and a connecting rod shank (6) of the connecting rod (4) in the state of the connecting rod mounted in the internal combustion engine using the device according to any one of the Claims 1 to 5, comprising at least the following steps:
a) transferring a piston of the cylinder into a defined position;
b) disconnecting and removing the screw connections between small end (5) and connecting rod shank (6);
c) mounting the swing guard (21) on the small end (5);
d) mounting the supports (24) on the counter-weights (12) of the cylinder;
e) mounting the holders (26) on the supports (24) ;
f) mounting the lift cylinders (29) on the holders (26);
g) lifting the small end (5) relative to the connecting rod shank (6) via the lift cylinders (19);
h) installing and/or removing the intermediate plate (10);
i) lowering the small end (5) relative to the connecting rod shank (6) via the lift cylinders (29);
j) demounting the lift cylinders (29), the holders (26), the supports (24) and the swing guard (21);
k) adding and tightening the screw connections between small end (5) and connecting rod shank (6).

7. The method according to Claim 6, **characterised in that** the piston in step a) is transferred to the bottom dead centre.

8. The method according to Claim 6 or 7, **characterised in that** following step g) and prior to step h) the props (33) are mounted and the small end (5) lowered relative to the connecting rod shank (6) until the small end (5) is propped up via the props (33).

9. The method according to Claim 8, **characterised in that** following step h) and prior to step i) the small end (5) is lifted relative to the connecting rod shank (6) and the props (33) demounted.

## Revendications

1. Dispositif (20) de réglage de la longueur d'une bielle (4) d'un cylindre d'un moteur à combustion interne, notamment par mise en place et/ou dépose d'une plaque intermédiaire (10) entre une tête de bielle (5) et un pied de bielle (6) de la bielle (4) à l'état monté du moteur à combustion interne (4), comportant au moins les ensembles suivants :
une protection anti-basculement (21) pour la tête de bielle (5) peut être montée sur la tête de bielle (5) entre la tête de bielle (5) et une chemise (3) du cylindre,
des patins (24) pouvant être montés de part et d'autre de la bielle (4) sur des contrepoids (12) du cylindre,
des supports (26), qui peuvent être montés sur les patins (24) et s'étendent entre les supports (24) perpendiculairement à ceux-ci,
des vérins de levage (29), qui peuvent être montés sur les supports (26) et sont utilisés pour soulever la tête de bielle (5) par rapport à la tige de bielle (6) lorsque des liaisons par vis entre la tête de bielle (5) et la tige de bielle (6) sont desserrées.

2. Dispositif selon la revendication 1, **caractérisé en ce qu'**au moins un des supports (24) comprend un étrier de fixation (31) par l'intermédiaire duquel la tige de bielle (6) peut être fixée sur le support respectif (24).

3. Dispositif selon la revendication 1 ou 2, **caractérisé en ce que** chaque support (26) présente au moins deux positions de réception (30) pour le vérin de levage (29).

4. Dispositif selon une des revendications 1 à 3, **caractérisé en ce que** les vérins de levage (29) sont des vérins hydrauliques.

5. Dispositif selon une des revendications 1 à 4, **caractérisé par** des étais (33), qui après avoir relevé la tête de bielle (5) par rapport au pied de bielle (6) sur la tête de bielle (5) peuvent être montés comme des éléments de protection.

6. Procédé de réglage de la longueur d'une bielle (4) d'un cylindre d'un moteur à combustion interne, à savoir par mise en place et/ou dépose d'une plaque intermédiaire (10) entre une tête de bielle (5) et un pied de bielle (6) de la bielle (4) dans l'état assemblé du moteur à combustion interne en utilisant le dispositif selon une quelconque des revendications 1 à 5, comportant au moins les étapes suivantes consistant à :
a) déplacer un piston du cylindre vers une position définie ;
b) desserrer et retirer les raccords vissés entre la tête de bielle (5) et la bielle (6) ;
c) monter la protection anti-basculement (21) sur la tête de bielle (5) ;
d) monter les patins (24) sur les contrepoids (12) du vérin ;
e) monter les supports (26) sur les patins (24) ;
f) monter les vérins de levage (29) sur les supports (26) ;
g) soulever la tête de bielle (5) par rapport au pied de bielle (6) via le vérin de levage (19) ;
h) mettre en place et/ou déposer la plaque intermédiaire (10) ;
i) abaisser la tête de bielle (5) par rapport à l'arbre de bielle (6) via le vérin de levage (29) ;
j) démonter les vérins de levage (29), les supports (26), les patins (24) et la protection anti-basculement (21) ;
k) ajouter et serrer des liaisons vissées entre la tête de bielle (5) et le pied de bielle (6) .

7. Procédé selon la revendication 6, **caractérisé en ce que** le piston à l'étape a) est déplacé au point mort bas.

8. Procédé selon la revendication 6 ou 7, **caractérisé en ce qu'**après l'étape g) et avant l'étape h) les étais (33) sont montés et la tête de bielle (5) est abaissée par rapport au pied de bielle (6), jusqu'à ce que la tête de bielle (5) prenne appui sur les supports (33).

9. Procédé selon la revendication 8, **caractérisé en ce qu'**après l'étape h) et avant l'étape i) la tête de bielle (5) est relevée par rapport au pied de bielle (6) et les étais (33) sont démontés.
